# EUROPÄISCHE PATENTSCHRIFT

(11) **EP 3 599 961 B1**
(45) Veröffentlichungstag und Bekanntmachung des Hinweises auf die Patenterteilung: **04.05.2022**
(21) Anmeldenummer: 18702679.4
(22) Anmeldetag: 31.01.2018
(51) Int. Cl.: A47L 9/28, A47L 5/36, A47L 7/00, B25F 5/00, H02J 7/00, G08C 17/02

(54) **SAUGGERÄT MIT STECKMODUL**
VACUUM CLEANER WITH PLUG-IN MODULE
ASPIRATEUR AVEC MODULE DE CONNECTEUR

(30) Priorität: 27.03.2017 DE 102017205072
(43) Veröffentlichungstag der Anmeldung: 05.02.2020
(73) Patentinhaber: Robert Bosch GmbH, 70442 Stuttgart (DE)
(72) Erfinder: TAUBER, Matthias, 73105 Duernau (DE); HARTMANN, Tim, 70734 Fellbach (DE); SCHADOW, Joachim, 70563 Stuttgart (DE); VOGT, Hans-Joachim, 70439 Stuttgart (DE); POGORZELSKI, Kamil, 70176 Stuttgart (DE); STOCK, Joern, 70711 Leinfelden-Echterdingen (DE); VAN DEN BOGAERT, Philippe, 70825 Korntal (DE); KLINGLER, Micha, 70771 Leinfelden-Echterdingen (DE); WISMER, Michael, 70771 Leinfelden-Echterdingen (DE); DENGLER, Klaus, 70806 Kornwestheim (DE); HAIN, Frederic, 70186 Stuttgart (DE)
(86) Internationale Anmeldenummer: PCT/EP2018/052362
(87) Internationale Veröffentlichungsnummer: WO 2018/177623

(56) Entgegenhaltungen:
- EP-A2- 2 229 857
- DE-A1-102012 003 073
- DE-A1-102014 226 051
- US-A1- 2009 241 283

## Beschreibung

Die vorliegende Erfindung betrifft ein Sauggerät mit einem Sauggerätgehäuse, mit zumindest einer Sauggerätnetzsteckdose und mit einem Steckmodul.

### Stand der Technik

Aus DE 10 2012 003 073 A1 ist bereits ein Sauggerät mit einem Saugergehäuse, mit einem Saugmotor und mit einer Steckdose bekannt. Das Saugergehäuse umfasst den Saugmotor als auch einen Staubsammelraum. Der Saugmotor ist dazu vorgesehen einen Saugstrom zu erzeugen und der Staubsammelraum dazu, abgesonderte Partikel aus dem Saugstrom zu sammeln. Hierzu saugt das Sauggerät über einen Saugschlauch am Saugergehäuse Partikel an. Das Sauggerät wird durch einen elektrischen Energiespeicher mit elektrischer Energie versorgt. Die elektrische Energie kann durch einen Akku, aber auch durch einen Netzbetrieb, beispielsweise durch ein 230 V Netz, zur Verfügung gestellt werden. An der Steckdose am Sauggerät kann ein Netzkabel einer Hand-Werkzeugmaschine angeschlossen werden, um die Hand-Werkzeugmaschine mit elektrischer Energie zu versorgen. Sobald die Hand-Werkzeugmaschine mit elektrischer Energie versorgt wird und ein Strom über die Steckdose fließt, schaltet sich der Saugmotor des Sauggeräts selbsttätig an. Um auch einer akkubetriebenen Hand-Werkzeugmaschine ein selbsttätiges Einschalten des Saugmotors zu ermöglichen, umfasst das Sauggerät ferner eine Sauggerät-Kommunikationseinrichtung als auch eine Extern-Kommunikationseinrichtung. Mit Hilfe der Sauggerät-Kommunikationseinrichtung und der Extern-Kommunikationseinrichtung kann ein leitungsloses Steuersignal und/oder Meldesignal gesendet und empfangen werden.

### Offenbarung der Erfindung

Die vorliegende Erfindung geht aus von einem System umfassend ein Sauggerät mit einem Sauggerätgehäuse und mit zumindest einer Sauggerätnetzsteckdose, wobei die zumindest eine Sauggerätnetzsteckdose am Sauggerätgehäuse angebracht ist. Es wird vorgeschlagen, dass das System zudem ein Steckmodul mit einer Steckmodulkommunikationseinheit, mit einer elektrischen Steckmodulnetzsteckereinheit und mit einer Stromsteuereinheit umfasst. Die Stromsteuereinheit ist dazu ausgebildet, einen elektrischen Strom zwischen dem Steckmodul und dem Sauggerät zu steuern.

Die Erfindung ermöglicht aufgrund der elektrischen Steckmodulnetzsteckereinheit eine universelle Verwendung des Steckmoduls zur Kommunikation des Sauggeräts mit einer externen Einheit, insbesondere einer Werkzeugmaschine. Das Steckmodul kann damit als universelles Steckmodul verwendet werden. Im Gegensatz zum Stand der Technik, liefert die vorliegende Erfindung die Lösung zur Aufgabe, dem Sauggerät nachträglich, über das universelle Steckmodul, eine Kommunikation mit der Werkzeugmaschine zu ermöglichen. Im Rahmen der vorliegenden Erfindung bedeutet "universell", dass das Steckmodul unabhängig eines Sauggerätherstellers und unabhängig von einem bestimmten Sauggerättyp oder Sauggerätgeneration die Kommunikation mit der Werkzeugmaschine herstellt. Das Steckmodul ist damit kompatibel und einsetzbar für im Wesentlichen jedes Sauggerät. Das Steckmodul kann mit Hilfe der elektrischen Steckmodulnetzsteckereinheit zum Beispiel in eine ohnehin an dem Sauggerät vorhandene Sauggerätnetzsteckdose eingesteckt werden. Der Stand der Technik liefert lediglich eine Möglichkeit der Kommunikation mit einer Hand-Werkzeugmaschine über die separate und spezielle Extern-Kommunikationseinrichtung. Diese separate und spezielle Extern-Kommunikationseinrichtung ist abhängig des Sauggerätherstellers und ist nicht für andere Sauggeräte verwendbar.

Das Sauggerät weist zumindest eine Sauggerätnetzsteckdose auf. Bei der Sauggerätnetzsteckdose handelt es sich um eine Netzsteckdose des Sauggeräts.

Im Rahmen der vorliegenden Erfindung umfasst eine Netzsteckdose zumindest eine elektrische Netzsteckeraufnahme mit zumindest zwei elektrischen Netzsteckeraufnahmeelementen. Netzsteckdosen sind dem Fachmann hinlänglich bekannt. Beispiele für die zumindest eine elektrische Netzsteckeraufnahme sind Netzsteckeraufnahmetypen A bis O mit zwei oder drei elektrischen Netzsteckeraufnahmeelementen. Eine Eurosteckeraufnahme oder eine Schukosteckeraufnahme sind zwei Beispiele für zumindest eine elektrische Netzsteckeraufnahme mit zwei elektrischen Netzsteckeraufnahmeelementen. Zudem sind Netzsteckeraufnahmetypen nach dem IEC 60309 Standard für einen Dreiphasenwechselstrom möglich, wie eine CEE-Steckaufnahmevorrichtung oder eine CeKon-Steckerkupplung. Die CEE-Steckaufnahmevorrichtung und die CeKon-Steckerkupplung sind Beispiele für die elektrische Netzsteckeraufnahme mit fünf elektrischen Netzsteckeraufnahmeelementen.

Das System umfasst ferner auch das Steckmodul mit der Steckmodulkommunikationseinheit und mit der Stromsteuereinheit. Zudem umfasst das Steckmodul ein Steckmodulgehäuse. Das Steckmodulgehäuse umfasst insbesondere die Steckmodulkommunikationseinheit wie auch die Stromsteuereinheit. In einer alternativen Ausführungsform ist es auch denkbar, dass die Steckmodulkommunikationseinheit als auch die Stromsteuereinheit in zwei getrennten Steckmodulgehäusen angeordnet sind.

Die Steckmodulkommunikationseinheit ist eine Kommunikationseinheit des Steckmoduls. Im Rahmen der vorliegenden Erfindung ist eine Kommunikationseinheit dazu ausgebildet, Kommunikationssignale zu senden und/oder zu empfangen. Die Kommunikationssignale können leitungsgebunden, über eine Drahtverbindung oder aber über Leiterbahnen auf einer Leiterplatine, übertragen werden und/oder die Kommunikationssignale können drahtlos übermittelt werden. Eine drahtlose Übermittelung der Kommunikationssignale kann dabei in Form von Bluetooth, WLAN, Nahfeldkommunikation mittels RFID-Technik sein, als auch weitere, dem Fachmann geläufige, drahtlose Übermittelungen der Kommunikationssignale. Verwendete Kommunikationsprotokolle können hierbei Bluetooth Smart, ANT, ZigBee, Lo-Ra, SigFox, NB-loT, BLE, IrDA sein, als auch weitere, dem Fachmann geläufige, Kommunikationsprotokolle.

Am Steckmodul ist die elektrische Steckmodulnetzsteckereinheit angebracht. Die elektrische Steckmodulnetzsteckereinheit ist eine Netzsteckereinheit des Steckmoduls. Die elektrische Steckmodulnetzsteckereinheit umfasst zumindest zwei elektrische Steckmodulnetzsteckerelemente.

Im Rahmen der vorliegenden Erfindung umfasst eine elektrische Netzsteckereinheit zumindest zwei elektrische Netzsteckerelemente. Dem Fachmann sind elektrische Netzsteckereinheiten hinlänglich bekannt. Beispiele für die elektrische Netzsteckereinheit sind Netzsteckertypen A bis O mit zwei oder drei elektrischen Netzsteckerelementen. Ein Eurostecker oder ein Schukostecker sind zwei Beispiele für die elektrische Netzsteckereinheit mit zwei elektrischen Netzsteckerelementen. Zudem sind Netzsteckertypen nach dem IEC 60309 Standard für einen Dreiphasenwechselstrom möglich, wie eine CEE-Steckvorrichtung oder ein CeKon-Stecker. Die CEE-Steckvorrichtung und der CeKon-Stecker sind Beispiele für die elektrische Netzsteckereinheit mit fünf elektrischen Netzsteckerelementen. Die elektrische Netzsteckereinheit ist insbesondere kompatibel mit der Netzsteckdose.

Das Steckmodul umfasst eine Stromsteuereinheit, die dazu ausgebildet ist, einen elektrischen Strom zwischen dem Steckmodul und dem Sauggerät zu steuern. Dazu ist die Stromsteuereinheit mit der elektrischen Steckmodulnetzsteckereinheit leitungsgebunden.

Bevorzugt ist die Steckmodulkommunikationseinheit dazu ausgebildet, ein erstes Signal, insbesondere ein Kommunikationssignal, von zumindest einer externen Kommunikationseinheit zu empfangen. Das erste Signal ist hierbei ein drahtloses Signal, kann aber auch ein drahtgebundenes Signal sein. Bei der zumindest einen externen Kommunikationseinheit handelt es sich um eine Kommunikationseinheit der eingangs genannten Art. Die Bezeichnung "extern" bezieht sich im Rahmen der vorliegenden Erfindung auf eine von der Steckmodulkommunikationseinheit separate Kommunikationseinheit, die sich zum Beispiel außerhalb des Steckmodulgehäuses befindet. Externe Kommunikationseinheiten können dabei eine Werkzeugmaschinenkommunikationseinheit, eine Sensormodulkommunikationseinheit oder eine Kommunikationseinheit eines externen Kommunikationsgerätes sein. Externe Kommunikationsgeräte sind zum Beispiel ein Smartphone, ein Tablet, ein PC, als auch weitere, dem Fachmann bekannte, externe Kommunikationsgeräte mit Kommunikationseinheit.

Ferner kann die Steckmodulkommunikationseinheit zusätzlich dazu ausgebildet sein, Kommunikationssignale an eine externe Kommunikationseinheit zu senden. Dabei kann eine Information von der Steckmodulkommunikationseinheit zum Beispiel an ein externes Kommunikationsgerät übermittelt werden.

Die Steckmodulkommunikationseinheit empfängt insbesondere das erste Signal von zumindest einer externen Kommunikationseinheit einer Werkzeugmaschine. Das erste Signal beinhaltet insbesondere eine Information über einen Betriebszustand der Werkzeugmaschine. Bei dem Betriebszustand handelt es sich insbesondere um einen eingeschalteten Zustand und/oder einen ausgeschalteten Zustand der Werkzeugmaschine. Auf diese Weise erhält die Steckmodulkommunikationseinheit eine Information über den Betriebszustand der Werkzeugmaschine.

In einer vorteilhaften Ausgestaltung ist die Steckmodulkommunikationseinheit dazu vorgesehen, das erste Signal in ein zweites Signal, insbesondere ein elektrisches Signal, umzuwandeln. Das erste Signal wird dabei innerhalb der Steckmodulkommunikationseinheit, zum Beispiel mittels eines Mikroprozessors und/oder eines Mikrocontrollers, bearbeitet und die Information über den Betriebszustand der Werkzeugmaschine wird in das zweite Signal, also das elektrische Signal, umgewandelt, damit es weiter verarbeitet werden kann.

In einer bevorzugten Weise ist die Steckmodulkommunikationseinheit dazu ausgebildet, das zweite Signal leitungsgebunden an die Stromsteuereinheit weiterzuleiten. Eine leitungsgebundene Weiterleitung des zweiten Signals kann dabei drahtgebunden erfolgen, wenn die Steckmodulkommunikationseinheit und die Stromsteuereinheit auf verschiedenen Leiterplatinen angeordnet sind. Die leitungsgebundene Weiterleitung des zweiten Signals kann auch über Leiterbahnen stattfinden, wenn die Steckmodulkommunikationseinheit und die Stromsteuereinheit auf einer Leiterplatine angeordnet sind.

Erfindungsgemäß ist die Stromsteuereinheit dazu ausgebildet, einen elektrischen Strom zwischen dem Steckmodul und dem Sauggerät zu steuern. Die Stromsteuereinheit lässt dabei zwischen den zumindest zwei Netzsteckerelementen des Steckmoduls einen Strom fließen. Damit simuliert das Steckmodul einen elektrischen Verbraucher. Zum Beispiel kann das Sauggerät eine Autostart-Funktion aufweisen, die ein selbsttätiges Starten eines Sauggerätantriebs ermöglicht, sobald ein lastabhängiger Strom an der Sauggerätnetzsteckdose vorhanden ist. Das Steckmodul simuliert hierbei den lastabhängigen Strom, wodurch der Sauggerätantrieb selbsttätig gestartet wird. Dem Fachmann ist die Funktionsweise der Autostart-Funktion bei Sauggeräten, insbesondere bei Verwendung einer netzbetriebenen Elektrowerkzeugmaschine, hinreichend bekannt, weshalb hier nicht näher darauf eingegangen wird.

Das Sauggerät umfasst in an sich bekannter Weise insbesondere einen Sauggerätantrieb, eine Sauggerätenergieversorgung, eine Staubsammelvorrichtung und eine Sauggerätsteuerung. Die Einzelheiten und die Wirkung von dem Sauggerätantrieb, der Sauggerätenergieversorgung, der Staubsammelvorrichtung und der Sauggerätsteuerung sind dem Fachmann hinreichend bekannt.

Bevorzugt handelt es sich bei dem Sauggerät um ein netzbetriebenes Sauggerät, welches mittels einem Stromversorgungskabel an eine externe Netzsteckdose verbindbar ist. Dabei kann die externe Netzsteckdose eine Spannung von beispielsweise 100 V, 110 V, 120 V, 127 V, 220 V, 230 V oder 240 V mit 50 Hz oder 60 Hz bereitstellen, aber auch eine Dreiphasenwechselspannung. Die möglichen Ausgestaltungen der externen Netzsteckdose und die damit verbundenen verfügbaren Spannungen sind dem Fachmann hinlänglich bekannt. Allerdings ist auch ein akkubetriebenes Sauggerät denkbar, welches mittels eines Akkus betreibbar ist.

Das Sauggerätgehäuse umfasst die zumindest eine Sauggerätnetzsteckdose. Ferner kann das Sauggerätgehäuse zumindest eine Sauggerätbedieneinheit, zumindest eine Sauggeräthalteeinheit und zumindest einen Saugschlauch aufweisen.

Die zumindest eine Sauggerätnetzsteckdose ist zumindest eine Netzsteckdose des Sauggeräts und ist am Sauggerätgehäuse angeordnet. Die zumindest eine Netzsteckdose des Sauggeräts ist dazu vorgesehen, ein angeschlossenes elektrisches Gerät mit Energie zu versorgen, wenn das Sauggerät selbst mit Energie versorgt ist. Wie oben beschrieben, ist die zumindest eine Sauggerätnetzsteckdose die zumindest eine Netzsteckdose des Sauggeräts, also eine Netzsteckdose.

Die Sauggerätbedieneinheit umfasst zumindest ein Sauggerätbedienelement, das dazu ausgebildet ist, durch einen Benutzer bedient zu werden und Schaltsignale zu erzeugen. Die Schaltsignale steuern dann den Sauggerätantrieb. Das zumindest eine Sauggerätbedienelement kann an einer Seite des Sauggerätgehäuses angeordnet sein. Sauggerätbedienelemente können beispielsweise ein Hauptschalter oder ein Einstellschalter sein. Der Hauptschalter ist dazu vorgesehen, den Sauggerätantrieb ein- und auszuschalten. Der Einstellschalter ist dazu ausgebildet, eine Saugleistung des Sauggeräts einzustellen. Das zumindest eine Sauggerätbedienelement ist ein Bedienelement des Sauggeräts.

Ein Bedienelement kann als zumindest ein Drückerelement, als zumindest ein Schiebeelement, als zumindest ein Drehelement oder aber als zumindest ein Kippelement ausgebildet sein. Auch weitere Ausführungsformen des zumindest einen Bedienelementes sind denkbar. Das zumindest eine Drückerelement ist dazu ausgebildet, von einem Benutzer gedrückt zu werden. Das zumindest eine Schiebeelement ist dazu vorgesehen, von einem Benutzer verschoben zu werden. Das zumindest eine Drehelement ist dazu ausgebildet, von einem Benutzer gedreht zu werden. Das zumindest eine Kippelement ist dazu vorgesehen, von einem Benutzer gekippt zu werden. Je nach Ausführungsform ist auch eine Kombination aus den genannten Bedienelementen möglich.

Die Sauggeräthalteeinheit umfasst zumindest ein Sauggeräthalteelement, beispielsweise einen Sauggeräthaltegriff, mit dem der Benutzer das Sauggerät halten kann. Der zumindest eine Saugschlauch ist zweckmäßig lösbar mit dem Sauggerät verbindbar, wobei eine unlösbare Verbindung von Saugschlauch und Sauggerät denkbar ist.

Zudem kann am Sauggerätgehäuse zumindest eine Sauggerätbewegungseinheit angebracht sein, sodass das Sauggerät zweckmäßig ein mobiles Sauggerät ist. Bevorzugt ist die zumindest eine Sauggerätbewegungseinheit als zumindest als eine Rolle, zumindest als ein Rad oder dergleichen ausgebildet, damit es auf einem Untergrund bewegt werden kann. Zudem kann das mobile Sauggerät als ein tragbares Sauggerät ausgestaltet sein, welches Rollen, Räder oder dergleichen aufweist oder aber keine Rollen, Räder oder dergleichen besitzt. Im Rahmen der vorliegenden Erfindung kann der Benutzer das Sauggerät mitnehmen und direkt an einem gewünschten Einsatzort einsetzen.

Die Einzelheiten und die Wirkung von der zumindest einen Sauggerätnetzsteckdose, der Sauggerätbedieneinheit, der Sauggeräthalteeinheit, dem Saugschlauch und der Sauggerätbewegungseinheit sind dem Fachmann hinreichend bekannt.

In einer ersten Ausführungsform der Erfindung ist das Steckmodul lösbar mit der zumindest einen Sauggerätnetzsteckdose verbindbar. Hierzu wird das Steckmodul über die elektrische Steckmodulnetzsteckereinheit mit der Sauggerätnetzsteckdose verbunden. Hierbei ist die elektrische Steckmodulnetzsteckereinheit mit ihren zumindest zwei elektrischen Steckmodulnetzsteckerelementen passend, insbesondere kompatibel, zur zumindest einen Sauggerätnetzsteckdose ausgebildet. Beim Verbinden der Steckmodulnetzsteckereinheit mit der Sauggerätnetzsteckdose wird eine elektrische Verbindung zwischen dem Steckmodul und der zumindest einen Sauggerätnetzsteckdose hergestellt, wodurch ein elektrischer Strom zwischen Steckmodul und Sauggerät fließen kann.

Im Rahmen dieser Erfindung bedeutet der Begriff "passend", insbesondere kompatibel, dass zwei Bauteile oder Elemente aufeinander abgestimmt sind, sodass sie miteinander eine mechanische und/oder elektrische Verbindung eingehen können.

In dieser ersten Ausführungsform der Erfindung umfasst die Stromsteuereinheit vorteilhafterweise eine Signalsteuereinheit und eine elektrische Last, wobei die Signalsteuereinheit dazu vorgesehen ist, das zweite Signal zu empfangen. Die Signalsteuereinheit als auch die elektrische Last können leitungsgebunden auf zwei verschiedenen Leiterplatinen sein, als auch auf einer Leiterplatine angeordnet. Besonders bevorzugt ist die Signalsteuereinheit als ein Mikrocontroller ausgebildet, der dazu vorgesehen ist, die elektrischen Signale von der Steckmodulkommunikationseinheit zu empfangen und zu steuern. Das Steuern erfolgt in dieser Ausführungsform an die elektrische Last. Die elektrische Last kann eine ohmsche Last, eine induktive Last, aber auch eine kapazitive Last, oder weitere, dem Fachmann bekannte, elektrische Lasten sein.

Bevorzugt ist die Signalsteuereinheit dazu ausgebildet, das zweite Signal an die elektrische Last zu schalten, und die elektrische Last ist dazu vorgesehen, das zweite Signal zu empfangen und in ein drittes Signal umzuwandeln, wobei die elektrische Last das dritte Signal an die elektrische Steckmodulnetzsteckereinheit weiterleitet. Wie oben beschreiben, ist die Signalsteuereinheit dazu vorgesehen, das zweite Signal zu schalten. In dieser Ausführungsform schaltet die Signalsteuereinheit das zweite Signal an die elektrische Last. Die elektrische Last, beispielsweise ausgebildet als ohmsche, induktive und/oder kapazitive Last, wandelt dann das zweite Signal in ein drittes Signal um. Dieses dritte Signal wird an die elektrische Steckmodulnetzsteckereinheit weitergeleitet, sodass der elektrische Strom zwischen Steckmodul und Sauggerät fließt.

In einer Ausführungsform, in der das Sauggerät eine Autostart-Funktion umfasst, kann dadurch das in die Sauggerätnetzsteckdose eingesteckte Steckmodul einen elektrischen Verbraucher simulieren. Auf diese Weise ersetzt das Steckmodul bei akkubetriebenen Werkzeugmaschinen die elektrische Verbindung zwischen Werkzeugmaschine und Sauggerät, wie sie bei Netzwerkzeugmaschinen über das Stromversorgungskabel besteht.

In einer zweiten Ausführungsform der Erfindung weist das Steckmodul zudem zumindest eine Steckmodulnetzsteckdose auf und die Stromsteuereinheit umfasst zusätzlich eine Schalteinheit. Die zumindest eine Steckmodulnetzsteckdose ist am Steckmodulgehäuse vorgesehen, insbesondere an einer anderen Seite des Steckmodulgehäuses als die elektrische Steckmodulnetzsteckereinheit. Die zumindest eine Steckmodulnetzsteckdose ist zumindest eine Netzsteckdose des Steckmoduls. Bei der zumindest einen Netzsteckdose des Steckmoduls handelt es sich um eine Netzsteckdose der eingangs genannten Art. Die zumindest eine Steckmodulnetzsteckdose ist passend, insbesondere kompatibel, zur elektrischen Steckmodulnetzsteckereinheit ausgebildet. Beispiele für eine passende Ausbildung von der zumindest einen Steckmodulnetzsteckdose und der elektrischen Steckmodulnetzsteckereinheit sind, ein Eurostecker und eine Eurosteckeraufnahme oder ein Schukostecker und eine Schukosteckeraufnahme, aber auch weitere, dem Fachmann vertraute, Möglichkeiten der passenden Ausbildung von Steckmodulnetzsteckereinheit und Steckmodulnetzsteckdose. In dieser zweiten Ausführungsform ist das Steckmodul lösbar mit einer externen Netzsteckdose verbindbar und ein Stromversorgungskabel des Sauggeräts ist lösbar mit der Steckmodulnetzsteckdose verbindbar. Die externe Netzsteckdose kann dabei eine Wandnetzsteckdose sein, als auch eine Verteilernetzsteckdose, aber auch ein Netzsteckdosenanschluss eines Verlängerungskabels und weitere, dem Fachmann bekannte, externe Netzsteckdosen. Die externe Netzsteckdose ist eine Netzsteckdose der eingangs genannten Art.

In einer anderen Ausführungsform ist es auch denkbar, dass das Steckmodulgehäuse mehr als eine Steckmodulnetzsteckdose umfasst.

Das Stromversorgungskabel des Sauggeräts umfasst eine elektrische Sauggerätnetzsteckereinheit. Die elektrische Sauggerätnetzsteckereinheit ist eine elektrische Netzsteckereinheit des Sauggeräts. Wie oben beschrieben, ist die elektrische Netzsteckereinheit des Sauggeräts eine elektrische Netzsteckereinheit der eingangs genannten Art. Das Stromversorgungskabel des Sauggeräts ist derart ausgestaltet, dass es passend zur Steckmodulnetzsteckdose ist und damit lösbar verbindbar ist. Das Steckmodul umfasst hierbei eine passende elektrische Steckmodulnetzsteckereinheit für die externe Netzsteckdose und eine passende Steckmodulnetzsteckdose für das Stromversorgungskabel des Sauggeräts.

In dieser zweiten Ausführungsform ist die Signalsteuereinheit vorteilhaft zusätzlich dazu ausgebildet, das zweite Signal an die Schalteinheit zu schalten, wenn das Stromversorgungskabel des Sauggeräts mit der Steckmodulnetzsteckdose verbunden ist und das Steckmodul mit der externen Netzsteckdose verbunden ist. Die Signalsteuereinheit und die Schalteinheit sind leitungsgebunden. Sie können auf einer Leiterplatine angeordnet sein, sodass das zweite Signal über Leiterbahnen geschaltet wird, als auch auf zwei Leiterplatinen mit einer drahtgebundenen Verbindung zu einer drahtgebundenen Schaltung. Die Signalsteuereinheit erkennt, wenn das Steckmodul in die externe Netzsteckdose eingesteckt wird. Zudem erkennt die Signalsteuereinheit, wenn das Stromversorgungskabel des Sauggeräts in die Steckmodulnetzsteckdose eingesteckt wird. Die Signalsteuereinheit ist dabei auch dazu ausgebildet, eine Impedanz zu messen, um ein angeschlossenes Sauggerät zu erkennen. Zusätzlich ist die Impedanzmessung dazu vorgesehen, eine Fehleranalyse zu ermöglichen. Somit sind Signalsteuereinheit, elektrische Last und Schalteinheit miteinander leitungsgebunden.

Ferner ist in dieser zweiten Ausführungsform die Schalteinheit bevorzugt dazu ausgebildet, das zweite Signal zu empfangen und eine leitungsgebundene Verbindung zwischen der zumindest einen Steckmodulnetzsteckdose und der elektrischen Steckmodulnetzsteckereinheit zu schalten. Die Schalteinheit schaltet die leitungsgebundene Verbindung zwischen der zumindest einen Steckmodulnetzsteckdose und der elektrischen Steckmodulnetzsteckereinheit, sobald es das zweite Signal von der Signalsteuereinheit empfängt. Schaltet die Schalteinheit, fließt der elektrische Strom zwischen Steckmodul und Sauggerät, sodass das Sauggerät mit Strom versorgt wird.

Diese zweite Ausführungsform eignet sich insbesondere auch für Sauggeräte ohne Autostart-Funktion. Dabei bewirkt das Steckmodul eine Autostart-Funktion des Sauggeräts, indem das Sauggerät startet, sobald das Steckmodul das erste Signal empfängt.

In einer alternativen Ausführungsform der zweiten Ausführungsform ist das Steckmodul nach Art eines Verlängerungskabels ausgebildet. Hierbei ist die elektrische Steckmodulnetzsteckereinheit nicht unmittelbar am Steckmodulgehäuse angebracht, sondern verfügt über eine Kabelverlängerung. Am Steckmodulgehäuse ist die Kabelverlängerung angeordnet, die in der elektrischen Steckmodulnetzsteckereinheit endet. Das Steckmodulgehäuse kann eine weitere Kabelverlängerung für die Steckmodulnetzsteckdose umfassen. Durch die weitere Kabelverlängerung verfügen die elektrische Steckmodulnetzsteckereinheit und die Steckmodulnetzsteckdose über einen größeren Abstand als bei der zweiten Ausführungsform, in der die Steckmodulnetzsteckdose und die elektrische Steckmodulnetzsteckereinheit unmittelbar am Steckmodulgehäuse angeordnet sind.

In einer vorteilhaften Ausgestaltung weist das Steckmodul zumindest ein Steckmodulanzeigeelement auf. Das Steckmodulanzeigeelement ist auf einer Seite des Steckmodulgehäuses angeordnet. Das Steckmodulanzeigeelement dient zum Beispiel zu einer Darstellung einer Anzahl an Betriebszuständen des Steckmoduls. Beispiele für Betriebszustände des Steckmoduls sind: Eingeschalten und/oder in Betrieb, ausgeschalten und/oder außer Betrieb, Kopplungsvorgang zwischen Steckmodulkommunikationseinheit und externer Kommunikationseinheit, Kopplungsvorgang abgeschlossen, sowie weitere, dem Fachmann bekannte, Betriebszustände.

Beispiele für das zumindest eine Steckmodulanzeigeelement sind eine LED, als auch ein Display. Es ist auch denkbar, dass das Steckmodul weitere Steckmodulanzeigeelemente umfasst.

Vorteilhaft umfasst das Steckmodul zumindest ein Steckmodulbedienelement. Das zumindest eine Steckmodulbedienelement ist auf einer Seite des Steckmodulgehäuses angeordnet. Das Steckmodulbedienelement ist dazu vorgesehen, dass ein Benutzer mittels des Steckmodulbedienelementes das Steckmodul bedienen kann. Das Steckmodulbedienelement ist ein Bedienelement des Steckmoduls, also ein Bedienelement der eingangs genannten Art.

Bevorzugt weist das System zusätzlich eine Werkzeugmaschine, insbesondere eine Hand-werkzeugmaschine und/oder eine stationäre Werkzeugmaschine, mit einer Werkzeugmaschinenkommunikationseinheit auf, wobei die Steckmodulkommunikationseinheit dazu ausgebildet ist, mit der Werkzeugmaschinenkommunikationseinheit eine Kommunikationsverbindung einzugehen. Die Werkzeugmaschine kann hierbei eine netzbetriebene Werkzeugmaschine, eine akkubetriebene Werkzeugmaschine, aber auch eine pneumatische Werkzeugmaschine sein. Zudem kann die Werkzeugmaschine auch über weitere, dem Fachmann bekannte, Möglichkeiten betrieben werden. Handwerkzeugmaschinen sind dem Fachmann ebenfalls hinreichend bekannt, weshalb hier nicht näher darauf eingegangen wird. Im Rahmen dieser Erfindung bedeutet "stationäre Werkzeugmaschine" eine Werkzeugmaschine, die aufgrund ihrer Größe, ihres Gewichts und/oder ihres Umfangs durch einen Benutzer nicht ohne weitere Hilfsmittel bewegt werden kann. Ein Beispiel für die stationäre Werkzeugmaschine ist eine Tischkreissäge. Weitere Beispiele für stationäre Werkzeugmaschinen sind dem Fachmann hinreichend bekannt. Die Werkzeugmaschinenkommunikationseinheit ist eine Kommunikationseinheit der Werkzeugmaschine, also eine Kommunikationseinheit der eingangs genannten Art. Damit die Steckmodulkommunikationseinheit und die Werkzeugmaschinenkommunikationseinheit die Kommunikationsverbindung eingehen können, müssen die beiden Kommunikationseinheiten einen Kopplungsvorgang, bzw. ein Pairing, durchführen. Im Rahmen dieser Erfindung bedeutet der Kopplungsvorgang, auch "Pairing" genannt, dass zwei Kommunikationseinheiten miteinander eine drahtlose Verbindung aufnehmen, einander registrieren bzw. erkennen und anschließend miteinander kommunizieren. Hier kann das Pairing beispielsweise über einen ersten oder zweiten Kommunikationspfad sein. Bei dem ersten Kommunikationspfad erfolgt das Pairing über eine Bluetooth Verbindung, wobei nach erfolgreicher Kopplung eine weitere Kommunikation ebenfalls über die Bluetooth Verbindung stattfindet. Bei dem zweiten Kommunikationspfad erfolgt das Pairing über eine Nahfeldkommunikation, NFC, bei der die Werkzeugmaschine und das Steckmodul in einen unmittelbaren Bereich zueinander gebracht werden. Dadurch koppeln sich die Werkzeugmaschine und das Steckmodul, wobei eine anschließende Kommunikation dann über eine Bluetooth Verbindung erfolgt. Dem Fachmann ist der Ablauf des Kopplungsvorganges, als auch das Pairing, sowie das Pairing über den ersten oder zweiten Kommunikationspfad, zwischen zwei Kommunikationseinheiten hinreichend bekannt, weshalb hier nicht näher darauf eingegangen wird.

Vorteilhaft ist die Steckmodulkommunikationseinheit dazu vorgesehen, mit der Werkzeugmaschinenkommunikationseinheit eine direkte Kommunikationsverbindung einzugehen. Im Rahmen dieser Erfindung bedeutet "direkte Kommunikationsverbindung" ein unmittelbarer Informations- und Signalaustausch zwischen der Steckmodulkommunikationseinheit und der Werkzeugmaschinenkommunikationseinheit, ohne eine weitere Kommunikationseinheit, die am unmittelbaren Signalaustausch beteiligt ist. Ein Senden und ein Empfangen von Kommunikationssignalen findet drahtlos und direkt zwischen Werkzeugmaschine und Steckmodul, über die zugehörigen Kommunikationseinheiten, statt. In einer alternativen Ausführungsform können bei der direkten Kommunikationsverbindung die Kommunikationssignale auch drahtgebunden ausgetauscht werden.

Zweckmäßigerweise ist die Steckmodulkommunikationseinheit zusätzlich oder alternativ dazu ausgebildet, mit der Werkzeugmaschinenkommunikationseinheit eine indirekte Kommunikationsverbindung mittels eines externen Kommunikationsgerätes einzugehen. Die indirekte Kommunikationsverbindung findet hierbei über das externe Kommunikationsgerät statt. Wie oben beschrieben, sind Beispiele für externe Kommunikationsgeräte das Smartphone, das Tablet, der PC und weitere, dem Fachmann bekannte, Kommunikationsgeräte. Das externe Kommunikationsgerät verfügt dabei über eine App, eine Routine und/oder ein Programm um die Kommunikationssignale zu verarbeiten. Die Kommunikationssignale zwischen Werkzeugmaschinenkommunikationseinheit und Steckmodulkommunikationseinheit finden hier stets über eine Kommunikationseinheit des externen Kommunikationsgerätes statt. Wenn die Werkzeugmaschinenkommunikationseinheit das Kommunikationssignal sendet, wird es von der Kommunikationseinheit des externen Kommunikationsgerätes empfangen und anschließend an die Steckmodulkommunikationseinheit gesendet. Dabei ist es denkbar, dass Betriebszustände der Werkzeugmaschine auf dem externen Kommunikationsgerät mittels der App, der Routine und/oder des Programmes angezeigt werden. Zudem ist es möglich, dass das Steckmodul einen Betriebszustand des Sauggerätes an das externe Kommunikationsgerät sendet und das externe Kommunikationsgerät diesen Betriebszustand des Sauggeräts anzeigt. Die Funktionsweise und der Einsatz der App, der Routine und/oder des Programmes für das externe Kommunikationsgerät zur Verarbeitung der Kommunikationssignale ist dem Fachmann hinlänglich bekannt.

In einer bevorzugten Ausführungsform umfasst das System zudem ein Sensormodul mit einer Sensormodulkommunikationseinheit und mit einer Sensoreinheit. Das Sensormodul umfasst ein Sensormodulgehäuse. Das Sensormodulgehäuse umfasst die Sensormodulkommunikationseinheit wie auch die Sensoreinheit. Die Sensormodulkommunikationseinheit ist eine Kommunikationseinheit des Sensormoduls, also eine Kommunikationseinheit der eingangs genannten Art. Eine Energieversorgung des Sensormoduls kann über eine austauschbare Batterie erfolgen, aber auch über einen aufladbaren Akku oder mittels Energy Harvesting. Das Prinzip des Energy Harvestings ist dem Fachmann hinreichend bekannt. Das Sensormodul dient insbesondere dazu, Betriebszustände der Werkzeugmaschine zu erkennen und weiterzuverarbeiten. Die Betriebszustände der Werkzeugmaschine sind dabei "aktiv", also durch einen Benutzer in Betrieb versetzt, und "inaktiv", durch einen Benutzer außer Betrieb versetzt.

Das Sensormodul kann an der Werkzeugmaschine oder dem Saugschlauch angeordnet sein. In einer bevorzugten Weise ist das Sensormodul dazu vorgesehen, eine lösbare Verbindung mit der Werkzeugmaschine, insbesondere mit einem Saugschlauch des Sauggeräts, einzugehen. Zudem weist das Sensormodul bevorzugt eine Sensormodulhaltevorrichtung auf. Die Sensormodulhaltevorrichtung ist dazu ausgebildet, das Sensormodul lösbar mit der Werkzeugmaschine oder dem Saugschlauch des Sauggeräts zu verbinden. Im Rahmen der vorliegenden Erfindung bedeutet "lösbar", dass der Benutzer das Sensormodul ohne weitere Hilfsmittel unmittelbar von der Werkzeugmaschine oder dem Saugschlauch des Sauggeräts entfernen kann. Die lösbare Verbindung zwischen dem Sensormodul und der Werkzeugmaschine oder dem Saugschlauch des Sauggeräts wird über die Sensormodulhaltevorrichtung erreicht. Beispiele für die Sensormodulhaltevorrichtung sind eine Steckaufnahme, und/oder ein Rastverbindungsmittel und/oder ein Klettverbindungsmittel und/oder ein Schraubverbindungsmittel, mit der Aufgabe, das Sensormodul an der Werkzeugmaschine oder dem Saugschlauch zu halten. Weitere Beispiele für die Sensormodulhaltevorrichtung sind dem Fachmann hinreichend bekannt, weshalb nicht näher darauf eingegangen wird. Es ist auch denkbar, dass das Sensormodul ein integrales Element der Werkzeugmaschine oder dem Saugschlauch ist.

Besonders bevorzugt ist die Sensoreinheit des Sensormoduls dazu ausgebildet, Betriebszustände der Werkzeugmaschine zu erfassen. Der Saugschlauch ist ferner mit der Werkzeugmaschine verbunden, wobei die Sensoreinheit dazu vorgesehen ist, die Betriebszustände leitungsgebunden an die Sensormodulkommunikationseinheit zu übermitteln, und die Sensormodulkommunikationseinheit ist dazu ausgebildet, das erste Signal an das Steckmodul zu senden. Die Sensoreinheit ist beispielsweise dazu vorgesehen, anhand von Vibrationen der Werkzeugmaschine deren Betriebszustände zu erkennen. Zusätzlich ist die Sensoreinheit dazu vorgesehen, zu unterscheiden, ob die Vibrationen durch den Benutzer oder durch die Werkzeugmaschine erzeugt wurden. Hierfür weist die Sensoreinheit einen Sensor zur Erfassung von Vibrationen auf. Beispiele für einen derartigen Sensor sind: ein Lagesensor, der eine Lage des Sensors erfasst, ein Bewegungssensor, der eine Bewegung des Sensors erkennt, ein Beschleunigungssensor, der eine Beschleunigung des Sensors erkennt, ein elektrischer Sensor, wie ein Spannungssensor und/oder ein Stromsensor, der einen elektrischen Stromfluss der Werkzeugmaschine erfasst, ein Drehzahlsensor, der eine Drehzahl eines Antriebmotors der Werkzeugmaschine erkennt oder ein Magnetsensor, der ein Magnetfeld des Antriebmotors der Werkzeugmaschine erfasst. Zudem ist die Sensoreinheit alternativ dazu vorgesehen, über weitere, dem Fachmann bekannte, Methoden die Betriebszustände der Werkzeugmaschine zu erfassen. Die Betriebszustände der Werkzeugmaschine sind, wie oben beschrieben, "aktiv" und "inaktiv". Die Sensoreinheit erkennt diese Betriebszustände, wenn das Sensormodul an der Werkzeugmaschine oder am Saugschlauch angebracht ist. Diese Betriebszustände der Werkzeugmaschine werden durch die Sensoreinheit in Form einer analogen Information erfasst. Durch einen geeigneten Auswertealgorithmus für die Sensoreinheit wird die analoge Information in eine digitale Information umgewandelt. Es ist denkbar, dass die Sensoreinheit und/oder die Sensormodulkommunikationseinheit eine Umwandlung der analogen Information in die digitale Information mittels des geeigneten Auswertealgorithmus durchführt.

Die Sensoreinheit und die Sensormodulkommunikationseinheit sind leitungsgebunden, wobei die Sensoreinheit und die Sensormodulkommunikationseinheit auf einer Leiterplatine angeordnet sein können, aber auch drahtgebunden auf zwei Leiterplatinen. Die Sensoreinheit übermittelt dann die digitale Information zu den erfassten Betriebszuständen der Werkzeugmaschine leitungsgebunden an die Sensormodulkommunikationseinheit. Die Sensormodulkommunikationseinheit wandelt anschließend den Betriebszustand der Werkzeugmaschine in das erste Signal um und sendet es an das Steckmodul. Das erste Signal transportiert eine Information über die Werkzeugmaschine an das Steckmodul.

Ganz besonders bevorzugt ist die Steckmodulkommunikationseinheit dazu vorgesehen, mit der Sensorkommunikationseinheit drahtlos zu kommunizieren. Damit die Sensormodulkommunikationseinheit mit der Steckmodulkommunikationseinheit drahtlos kommunizieren kann, muss der Kopplungsvorgang, bzw. das Pairing, zwischen diesen beiden Bauteilen stattfinden. Der Kopplungsvorgang zwischen zwei Kommunikationseinheiten wurde oben bereits beschrieben. Zudem ist der Kopplungsvorgang dem Fachmann hinreichend bekannt, weshalb hier nicht näher darauf eingegangen wird. Nach einem erfolgreichen Kopplungsvorgang kann dann die Sensormodulkommunikationseinheit das erste Signal an die Steckmodulkommunikationseinheit drahtlos übermitteln. In einer alternativen Ausführungsform können die Sensormodulkommunikationseinheit und die Steckmodulkommunikationseinheit auch leitungsgebunden sein, wodurch das erste Signal dann leitungsgebunden übermittelt wird.

Vorteilhaft umfasst das Sensormodul zumindest ein Sensormodulanzeigeelement. Das Sensormodulgehäuse umfasst das Sensormodulanzeigeelement. Zudem ist das Sensormodulanzeigeelement dazu ausgebildet, Betriebszustände des Sensormoduls anzuzeigen. Die Betriebszustände des Sensormoduls können dabei beispielsweise "eingeschalten", "ausgeschalten", "automatischer Betriebsmodus", "Pairing", "verbunden", ein Batterieladezustand, oder weitere, dem Fachmann bekannte, Betriebszustände des Sensormoduls sein. Beispiele für Sensormodulanzeigeelemente sind zumindest eine LED oder zumindest ein Display.

In vorteilhafter Weise umfasst das Sensormodul zumindest ein Sensormodulbedienelement. Das Sensormodulgehäuse umfasst zudem das zumindest eine Sensormodulbedienelement. Das zumindest eine Sensormodulbedienelement ist ein Bedienelement des Sensormoduls, also ein Bedienelement der eingangs genannten Art.

### Kurze Beschreibung der Zeichnungen

Die Erfindung wird nachfolgend anhand von bevorzugten Ausführungsformen erläutert. Die Zeichnungen im Folgenden zeigen:
- Fig. 1: ein erfindungsgemäßes System bestehend aus einem Sauggerät und einem Steckmodul in einer schematischen Ansicht in einer ersten Ausführungsform;
- Fig. 2: eine zweite Ausführungsform des erfindungsgemäßen Systems in einer schematischer Darstellung;
- Fig. 3: eine Ausführungsform des Steckmoduls in drei Ansichten in schematischer Darstellung;
- Fig. 4: ein Blockdiagramm zur Erläuterung des Steckmoduls aus Fig. 3;
- Fig. 5: eine schematische Darstellung des Sauggeräts mit Steckmodul und einer Werkzeugmaschine in einer direkten Kommunikation;
- Fig. 6: ein Sauggerät mit Steckmodul und Werkzeugmaschine, die über eine indirekte Kommunikationsverbindung verbunden sind, in schematischer Darstellung;
- Fig. 7: zwei schematische Darstellungen zu dem System aus dem Sauggerät mit dem Steckmodul und mit einem Sensormodul;

### Beschreibung der Ausführungsbeispiele

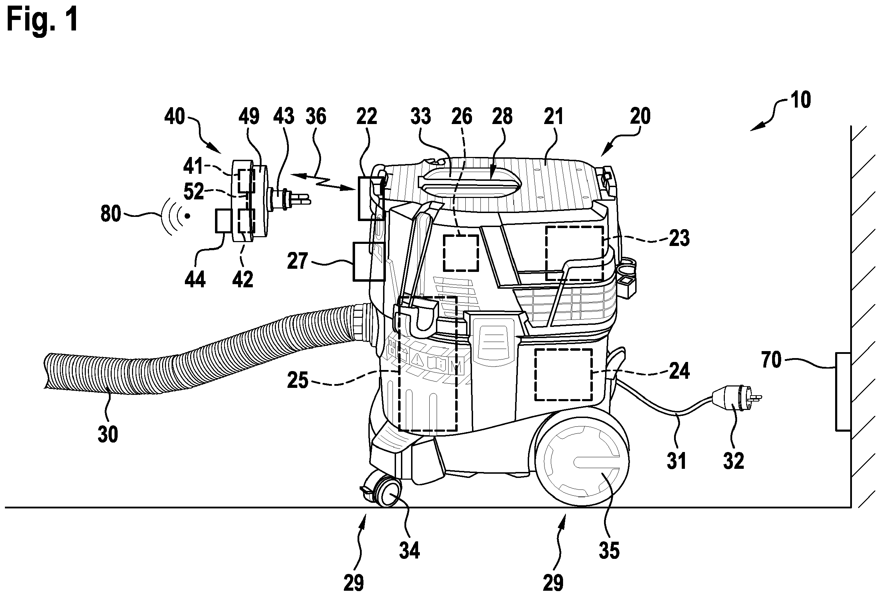

Fig. 1 zeigt ein erfindungsgemäßes System **10,** welches ein Sauggerät **20** mit einem Sauggerätgehäuse **21** und mit einer Sauggerätnetzsteckdose **22** umfasst. Dabei ist die Sauggerätnetzsteckdose **22** am Sauggerätgehäuse **21** angebracht. Die Sauggerätnetzsteckdose **22** ist in dieser Ausführungsform als eine Schukosteckeraufnahme ausgebildet. In anderen Ausführungsformen sind auch weitere Netzsteckeraufnahmetypen denkbar, wie oben beschrieben. Die Sauggerätnetzsteckdose **22** kann ein angeschlossenes elektrisches Gerät mit Energie versorgen.

Zudem umfasst das Sauggerät **20** einen Sauggerätantrieb **23,** eine Sauggerätenergieversorgung **24,** eine Staubsammelvorrichtung **25** und eine Sauggerätsteuerung **26.** Die Funktionsweise und das Zusammenwirken von dem Sauggerätantrieb **23,** der Sauggerätenergieversorgung **24,** der Staubsammelvorrichtung **25,** und der Sauggerätsteuerung **26,** sind dem Fachmann hinlänglich bekannt.

In dieser Ausführungsform handelt es sich bei dem Sauggerät **20** um ein netzbetriebenes Sauggerät **20,** das über ein Stromversorgungskabel **31** an eine externe Netzsteckdose **70** verbindbar ist. Hier stellt die externe Netzsteckdose **70** eine Spannung von 230 V bereit. In anderen Ausführungsformen kann die externe Netzsteckdose **70,** wie oben beschrieben, auch andere Spannungen bereitstellen. Das Stromversorgungskabel **31** umfasst eine Netzsteckereinheit **32,** welche in dieser Ausführungsform als ein Schukostecker ausgebildet ist.

Das Sauggerätgehäuse **21** weist eine Sauggerätbedieneinheit **27,** eine Sauggeräthalteeinheit **28** und einen Saugschlauch **30** auf. Die Sauggerätbedieneinheit **27** ist in dieser Ausführungsform auf derselben Seite des Sauggerätgehäuses **21** angeordnet, wie die Sauggerätnetzsteckdose **22** und der Saugschlauch **30.** Zudem ist die Sauggerätbedieneinheit **27** dazu ausgebildet, durch einen Benutzer bedient zu werden und Schaltsignale zu erzeugen. Der Sauggerätantrieb **23** wird durch die Schaltsignale gesteuert.

Die Sauggeräthalteeinheit **28** umfasst in dieser Ausführungsform ein Sauggeräthalteelement, hier einen Sauggeräthaltegriff **33.** Der Benutzer kann das Sauggerät **20** am Sauggeräthaltegriff **33** halten. Der Saugschlauch **30** ist in dieser Ausführungsform zweckmäßig lösbar mit dem Sauggerät **20** verbindbar. Hier befindet sich der Saugschlauch **30** an derselben Seite des Sauggerätgehäuses **21** wie die Sauggerätnetzsteckdose **22** wie auch die Sauggerätbedieneinheit **27.** In einer anderen Ausführungsform kann der Saugschlauch **30** auch unlösbar mit dem Sauggerät **20** verbunden sein.

Am Sauggerätgehäuse **21** ist eine Sauggerätbewegungseinheit **29** angebracht. In dieser Ausführungsform besteht die Sauggerätbewegungseinheit **29** aus vorderen Lenkrollen **34** und hinteren Rollen **35.** Die vorderen Lenkrollen **34** dienen dazu, dass der Benutzer das Sauggerät **20** in geschickter Weise zu einem benötigten Einsatzort lenken kann. Aufgrund des Sauggeräthaltegriffs **33** kann der Benutzer zudem das Sauggerät **20** an den benötigten Einsatzort tragen.

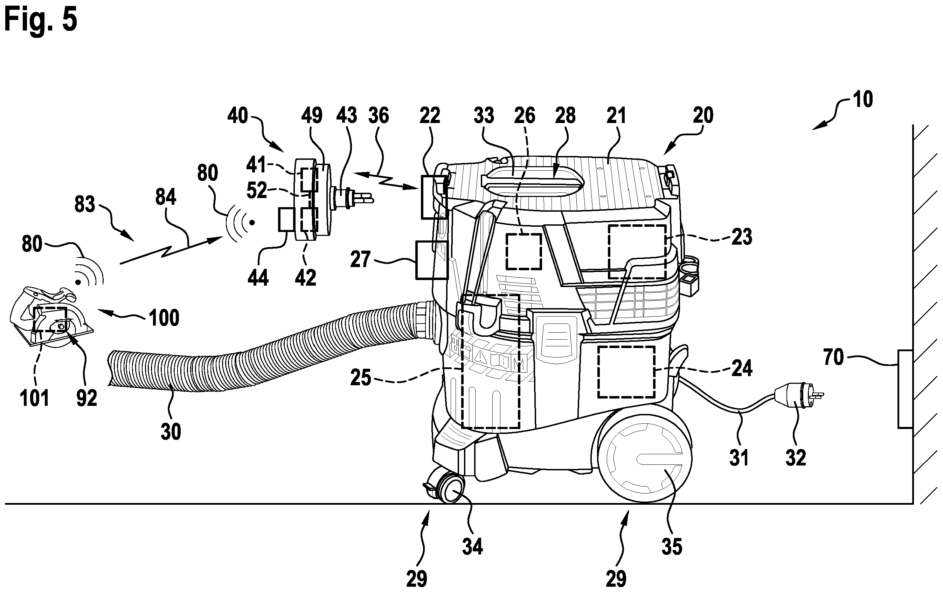

Das System **10** umfasst zudem ein Steckmodul **40** mit einer Steckmodulkommunikationseinheit **41** und mit einer Stromsteuereinheit **42** sowie eine elektrische Steckmodulnetzsteckereinheit **43.** Die Steckmodulkommunikationseinheit **41** ist dazu ausgebildet, ein erstes Signal **80** zu empfangen und zu verarbeiten. Das erste Signal **80** wird von einer externen Kommunikationseinheit **92** gesendet, siehe beispielsweise Fig. 5. Das erste Signal **80** beinhaltet eine Information zu einem Betriebszustand der Werkzeugmaschine **100,** wie eingangs beschrieben. Beispiele für externe Kommunikationseinheiten **92** sind eine Werkzeugmaschinenkommunikationseinheit **101,** eine Sensormodulkommunikationseinheit **122** und eine Kommunikationseinheit **91** eines externen Kommunikationsgerätes **90.**

Durch die Stromsteuereinheit **42** wird ein elektrischer Strom **36** zwischen dem Steckmodul **40** und dem Sauggerät **20** gesteuert.

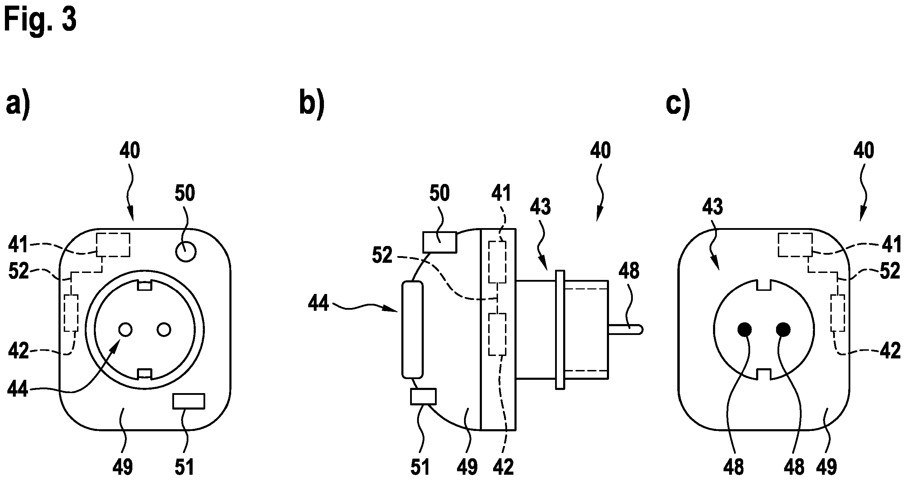

In der Ausführungsform des Steckmoduls **40** nach Fig.1 kann das Steckmodul **40** mit der Sauggerätnetzsteckdose **22** lösbar verbunden werden. Dazu ist die elektrische Steckmodulnetzsteckereinheit **43** als ein Schukostecker ausgebildet, sodass das Steckmodul **40** in die Schukosteckeraufnahme der Sauggerätnetzsteckdose **22** gesteckt wird. In dieser Ausführungsform des Steckmoduls **40** hat die elektrische Steckmodulnetzsteckereinheit **43** zwei elektrische Steckmodulnetzsteckerelemente **48,** siehe hierzu Fig. 3. Sobald das Steckmodul **40** mit der Sauggerätnetzsteckdose **22** verbunden ist, kann grundsätzlich der elektrische Strom **36** zwischen Steckmodul **40** und Sauggerät **20** fließen.

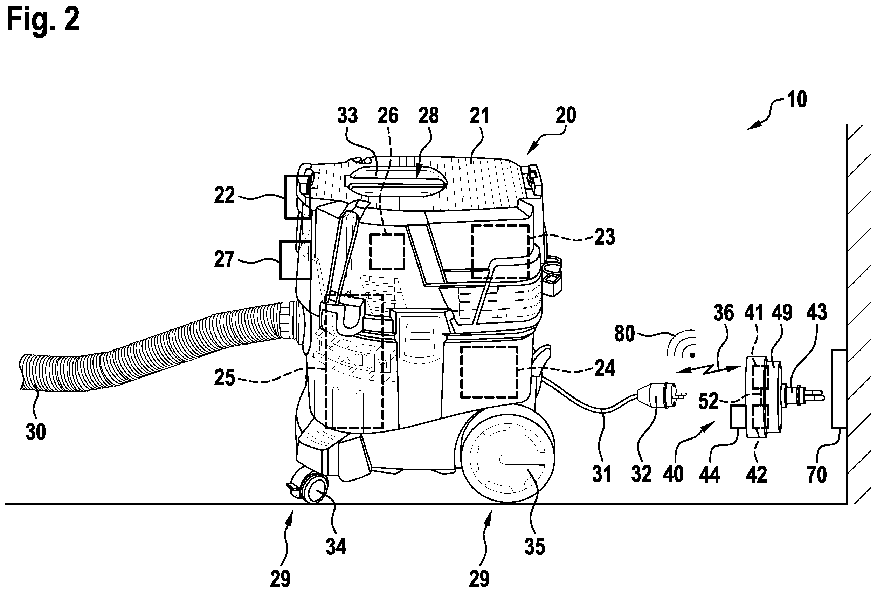

In Fig. 2 ist eine zweite Ausführungsform des Steckmoduls **40** schematisch dargestellt. Die Ausführung des Sauggeräts **20** ist gemäß Fig. 1. Der Unterschied von der zweiten Ausführungsform des Steckmoduls **40** zur ersten Ausführungsform des Steckmoduls **40** besteht darin, dass das Steckmodul **40** der zweiten Ausführungsform zusätzlich eine Steckmodulnetzsteckdose **44** umfasst. Die Steckmodulnetzsteckdose **44** ist als eine Schukosteckeraufnahme ausgebildet. Weiter ist die Steckmodulnetzsteckdose **44** am Steckmodulgehäuse **49** angeordnet und in der zweiten Ausführungsform des Steckmoduls **40** auf der gegenüberliegenden Seite zur elektrischen Steckmodulnetzsteckereinheit **43.** Die zweite Ausführungsform des Steckmoduls **40** umfasst, wie die erste Ausführungsform des Steckmoduls **40,** die Steckmodulkommunikationseinheit **41** wie auch die Stromsteuereinheit **42.** In einer alternativen Ausführungsform des Steckmoduls **40** ist es denkbar, dass weitere Steckmodulnetzsteckdosen **44** am Steckmodulgehäuse **49** angeordnet sind. In der zweiten Ausführungsform des Steckmoduls **40** ist die elektrische Steckmodulnetzsteckereinheit **43** und die Steckmodulnetzsteckdose **44** als Schukostecker und Schukosteckeraufnahme ausgebildet. In einer anderen Ausführungsform ist es möglich, dass das Steckmodulgehäuse **49** mehr als eine Steckmodulnetzsteckdose **44** aufweist.

Das Steckmodul **40** der zweiten Ausführungsform ist lösbar mit der externen Netzsteckdose **70** verbindbar und wird durch den Benutzer eingesteckt. Das Stromversorgungskabel **31** des Sauggeräts **20** ist zudem lösbar mit der Steckmodulnetzsteckdose **44** verbindbar. In dieser Ausführungsform ist die externe Netzsteckdose **70** eine Wandnetzsteckdose.

Der Benutzer verbindet das Sauggerät **20** über das Stromversorgungskabel **31** des Sauggeräts **20** mit der Steckmodulnetzsteckdose **44** des Steckmoduls **40.** Außerdem verbindet der Benutzer das Steckmodul **40** über die elektrische Steckmodulnetzsteckereinheit **43** mit der externen Netzsteckdose **70.** Dadurch wird das Steckmodul **40** wie auch das Sauggerät **20** mit elektrischer Energie versorgt und der elektrische Strom **36** kann zwischen Sauggerät **20** und Steckmodul **40** fließen. Der elektrische Strom **36** fließt zwischen Steckmodul **40** und Sauggerät **20,** sobald das erste Signal **80** durch das Steckmodul **40** empfangen und verarbeitet wurde.

Fig. 3 zeigt eine schematische Darstellung des erfindungsgemäßen Steckmoduls **40** in drei Ansichten. Das Steckmodul **40** umfasst das Steckmodulgehäuse **49.** In Fig. 3a ist eine schematische Frontansicht des Steckmoduls **40** angegeben. Das Steckmodulgehäuse **49** umfasst die Steckmodulnetzsteckdose **44,** die als Schukosteckeraufnahme ausgebildet ist, ein Anzeigeelement **50** des Steckmoduls **40** und ein Bedienelement **51** des Steckmoduls **40.**

Das Steckmodulgehäuse **49** umfasst die Steckmodulkommunikationseinheit **41** und die Stromsteuereinheit **42.** Die Steckmodulkommunikationseinheit **41** und die Stromsteuereinheit **42** sind mittels einer leitungsgebundenen Verbindung **52** verbunden.

Fig. 3b zeigt eine schematische Seitenansicht des Steckmoduls **40** mit der elektrischen Steckmodulnetzsteckereinheit **43,** ausgebildet als Schukostecker, mit zwei elektrischen Steckmodulnetzsteckerelementen **48**. In dieser Ausführungsform befinden sich die Steckmodulnetzsteckdose **44** und die elektrische Steckmodulnetzsteckereinheit **43** an dem

Steckmodulgehäuse **49** auf gegenüberliegenden Seiten. In Fig. 3c ist eine schematische Rückansicht mit der elektrischen Steckmodulnetzsteckereinheit **43** des Steckmoduls **40** dargestellt.

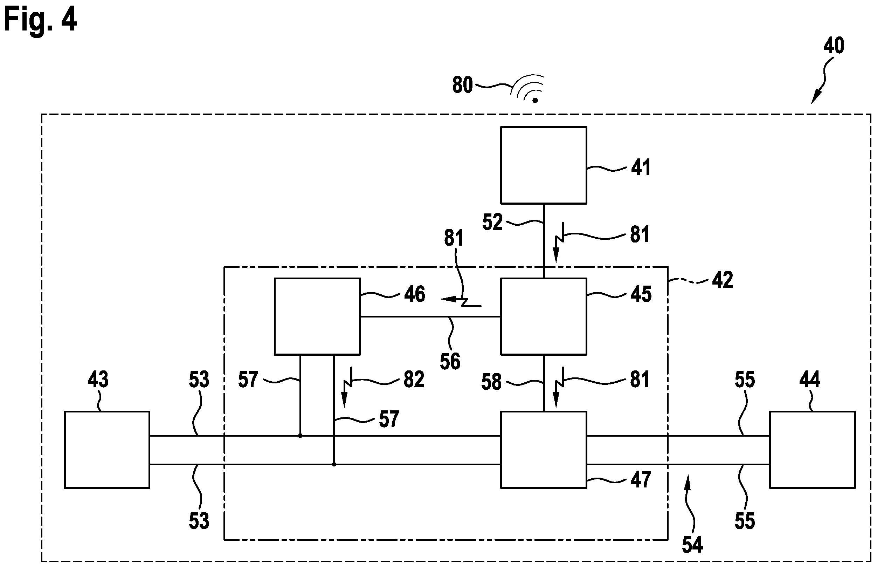

In Fig. 4 ist ein schematisches Blockdiagramm des Steckmoduls **40** dargestellt. Die Steckmodulkommunikationseinheit **41** ist über eine leitungsgebundene Verbindung **52** mit der Stromsteuereinheit **42** verbunden. Die Stromsteuereinheit **42** ist mit der elektrischen Steckmodulnetzsteckereinheit **43** mittels einer leitungsgebundenen Verbindung **53** verbunden. Zudem besteht eine Leitungsverbindung **55** zwischen Steckmodulnetzsteckdose **44** und der Stromsteuereinheit **42.** Somit besteht eine leitungsgebundene Verbindung **54** von der Steckmodulnetzsteckdose **44** mit der elektrischen Steckmodulnetzsteckereinheit **43.** Die Stromsteuereinheit **42** umfasst ferner eine Signalsteuereinheit **45** und eine elektrische Last **46.** Die Signalsteuereinheit **45** und die elektrische Last **46** bilden eine Leitungsverbindung **56** aus. Zudem ist die elektrische Last **46** mittels einer Leitungsverbindung **57** mit der elektrischen Steckmodulnetzsteckereinheit **43** verbunden. Weiter besteht zwischen der Signalsteuereinheit **45** und der Schalteinheit **47** ebenfalls eine Leitungsverbindung **58.** Zwischen der Schalteinheit **47** und der elektrischen Steckmodulnetzsteckereinheit **43** besteht eine Leitungsverbindung **59.** Die Schalteinheit **47** stellt die leitungsgebundene Verbindung **54** von der Steckmodulnetzsteckdose **44** und der elektrischen Steckmodulnetzsteckereinheit **43** her.

Die Steckmodulkommunikationseinheit **41** empfängt das erste Signal **80** und wandelt dieses in ein zweites Signal **81** um. Das erste Signal **80** ist ein drahtloses Kommunikationssignal, kann in einer alternativen Ausführungsform aber auch drahtgebunden sein, und beinhaltet eines der beiden Betriebszustände der Werkzeugmaschine **100,** "aktiv" oder "inaktiv", wie eingangs beschrieben. Die Umwandlung des ersten Signals **80** erfolgt in ein elektrisches Signal, das zweite Signal **81.** Die Steckmodulkommunikationseinheit **41** leitet das zweite Signal **81** über die leitungsgebundene Verbindung **52** an die Stromsteuereinheit **42** weiter. In der Stromsteuereinheit **42** empfängt die Signalsteuereinheit **45** das zweite Signal **81.** Die Signalsteuereinheit **45** schaltet das zweite Signal **81** entweder an die elektrische Last **46,** über die Leitungsverbindung **56,** oder an die Schalteinheit **47,** über die Leitungsverbindung **58.**

Wenn das Steckmodul **40** mit der Sauggerätnetzsteckdose **22** verbunden ist, schaltet die Signalsteuereinheit **45** das zweite Signal **81** an die elektrische Last **46.** Die elektrische Last **46** empfängt das zweite Signal **81** und wandelt dieses in ein drittes Signal **82** um. Anschließend leitet die elektrische Last **46** das dritte Signal **82** an die elektrische Steckmodulnetzsteckereinheit **43,** über die Leitungsverbindung **57,** weiter.

Wenn das Steckmodul **40** mit der externen Netzsteckdose **70** und das Stromversorgungskabel **31** des Sauggeräts **20** mit der Steckmodulnetzsteckdose **44** verbunden ist, schaltet die Signalsteuereinheit **45** das zweite Signal **81** an die Schalteinheit **47.** Die Signalsteuereinheit **45** schaltet das zweite Signal **81** über die Leitungsverbindung **58** an die Schalteinheit **47.** Wenn die Schalteinheit **47** das zweite Signal **81** empfängt, stellt es die leitungsgebundene Verbindung **54** zwischen der Steckmodulnetzsteckdose **44** und der elektrischen Steckmodulnetzsteckereinheit **43** her.

Wenn das erste Signal **80** den Betriebszustand "aktiv" der Werkzeugmaschine **100** enthält, wird der elektrische Strom **36** geschalten und der Sauggerätantrieb **23** startet. Beinhaltet das erste Signal **80** den Betriebszustand "inaktiv" der Werkzeugmaschine **100,** wird der elektrische Strom **36** gestoppt und das Sauggerät **20** ausgeschalten (Autostart-Funktion).

Fig.5 zeigt eine schematische Ausführung gemäß Fig.1, mit dem Unterschied, dass das System **10** zusätzlich eine Werkzeugmaschine **100** umfasst. In dieser Ausführungsform ist die Werkzeugmaschine **100** als akkubetriebene Handwerkzeugmaschine ausgebildet, es ist jedoch auch eine netzbetriebene Handwerkzeugmaschine oder eine stationäre Werkzeugmaschine denkbar. Die Werkzeugmaschine **100** ist mit dem Saugschlauch **30** des Sauggeräts **20** verbunden. Die Werkzeugmaschine **100** umfasst eine Werkzeugmaschinenkommunikationseinheit **101.** Die Steckmodulkommunikationseinheit **41** bildet mit der Werkzeugmaschinenkommunikationseinheit **101** eine Kommunikationsverbindung **83** aus. In dieser Ausführungsform handelt es sich bei der Kommunikationsverbindung **83** um eine direkte Kommunikationsverbindung **84,** bei der eine Kommunikation direkt von der Werkzeugmaschine **100** zu dem Steckmodul **40** erfolgt. Die direkte Kommunikationsverbindung **84** ist eine drahtlose Kommunikationsverbindung, bei der ein Informationsaustausch unmittelbar zwischen der Werkzeugmaschine **100** und dem Steckmodul **40** erfolgt.

Die Steckmodulkommunikationseinheit **41** und die Werkzeugmaschinenkommunikationseinheit **101** gehen die direkte Kommunikationsverbindung **84** ein, nachdem die beiden Kommunikationseinheiten einen Kopplungsvorgang, bzw. ein Pairing, durchgeführt haben. Der Kopplungsvorgang ist dem Fachmann hinlänglich bekannt. Die direkte Kommunikationsverbindung **84** ist eine drahtlose Kommunikationsverbindung, kann aber auch in einer alternativen Ausführungsform drahtgebunden sein. Nach dem Kopplungsvorgang sendet die Werkzeugmaschinenkommunikationseinheit **101** das erste Signal **80,** sobald die Werkzeugmaschine **100** gestartet bzw. in Betrieb genommen wird. Die Steckmodulkommunikationseinheit **41** empfängt das erste Signal **80** und startet den elektrischen Strom **36** und damit den Sauggerätantrieb **23** (Autostart-Funktion).

Die direkte Kommunikationsverbindung **84** ist auch bei der zweiten Ausführungsform des Steckmoduls **40,** vergleiche hierzu Fig. 2, möglich. Bei der zweiten Ausführungsform des Steckmoduls **40** wird das Steckmodul **40** mit der externen Netzsteckdose **70** verbunden. Das Stromversorgungskabel **31** des Sauggeräts **20** wird hierbei mit der Steckmodulnetzsteckdose **44** verbunden. Wenn die Werkzeugmaschinenkommunikationseinheit **101** das erste Signal **80** sendet, sobald die Werkzeugmaschine **100** startet, empfängt die Steckmodulkommunikationseinheit **41** das erste Signal **80** und steuert den elektrischen Strom **36.** Auch in dieser Ausführungsform ist die Werkzeugmaschine **100** mit dem Saugschlauch **30** des Sauggeräts **20** verbunden.

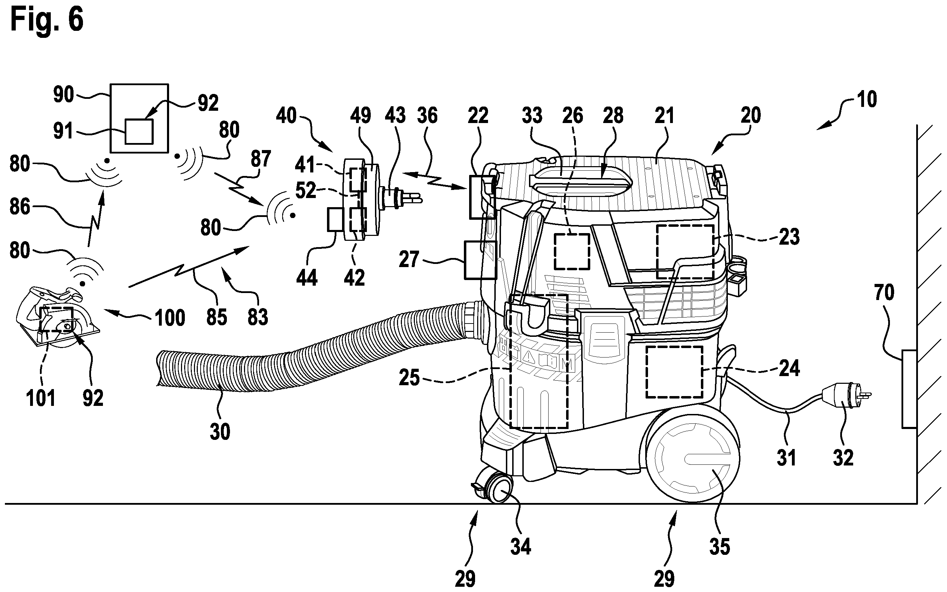

Anhand von Fig. 6 wird eine zu Fig. 5 alternative Kommunikationsverbindung, eine indirekte Kommunikationsverbindung **85,** erläutert. Die indirekte Kommunikationsverbindung **85** ist eine drahtlose Kommunikationsverbindung, kann aber auch in einer alternativen Ausführungsform drahtgebunden sein. Das System **10** umfasst hier zusätzlich ein externes Kommunikationsgerät **90** mit einer Kommunikationseinheit **91** des externen Kommunikationsgeräts **90.** Die indirekte Kommunikationsverbindung **85** von Werkzeugmaschine **100** zu dem Steckmodul **40** wird hierbei über das externe Kommunikationsgerät **90** hergestellt.

Die Werkzeugmaschine **100** ist mit dem Saugschlauch **30** des Sauggeräts **20** verbunden. Sobald die Werkzeugmaschine **100** startet, sendet die Werkzeugmaschinenkommunikationseinheit **101** das erste Signal **80** über eine Kommunikationsverbindung **86** an die Kommunikationseinheit **91** des externen Kommunikationsgeräts **90.** Die Kommunikationseinheit **91** des externen Kommunikationsgeräts **90** leitet das erste Signal 80 über eine Kommunikationsverbindung **87** an die Steckmodulkommunikationseinheit **41** weiter. Das Steckmodul **40** verarbeitet dann das erste Signal **80** und steuert den elektrischen Strom **36.** Beispiele für externe Kommunikationsgeräte **90** sind ein Smartphone, ein Tablet, ein PC und weitere, dem Fachmann bekannte, Kommunikationsgeräte.

Die indirekte Kommunikationsverbindung **85** ist ebenso bei der zweiten Ausführungsform des Steckmoduls **40,** vergleiche hierzu Fig. 2, möglich. Um die indirekte Kommunikationsverbindung **85** bei der zweiten Ausführungsform des Steckmoduls **40** zu erreichen, wird das Steckmodul **40** mit der externen Netzsteckdose **70** verbunden. Anschließend wird das Stromversorgungskabel **31** des Sauggeräts **20** mit der Steckmodulnetzsteckdose **44** verbunden. Die Werkzeugmaschine **100** ist weiterhin mit dem Saugschlauch **30** des Sauggeräts **20** verbunden. Eine Übertragung der Kommunikationssignale erfolgt, wie bereits oben beschrieben, über die Kommunikationseinheit **91** des externen Kommunikationsgerätes **90.** Hierbei ist der Unterschied zur oben beschriebenen Ausführung lediglich die Anordnung von Sauggerät **20,** Steckmodul **40** und externer Netzsteckdose **70.** Auch in dieser Ausführungsform ist die Werkzeugmaschine **100** mit dem Saugschlauch **30** des Sauggeräts **20** verbunden.

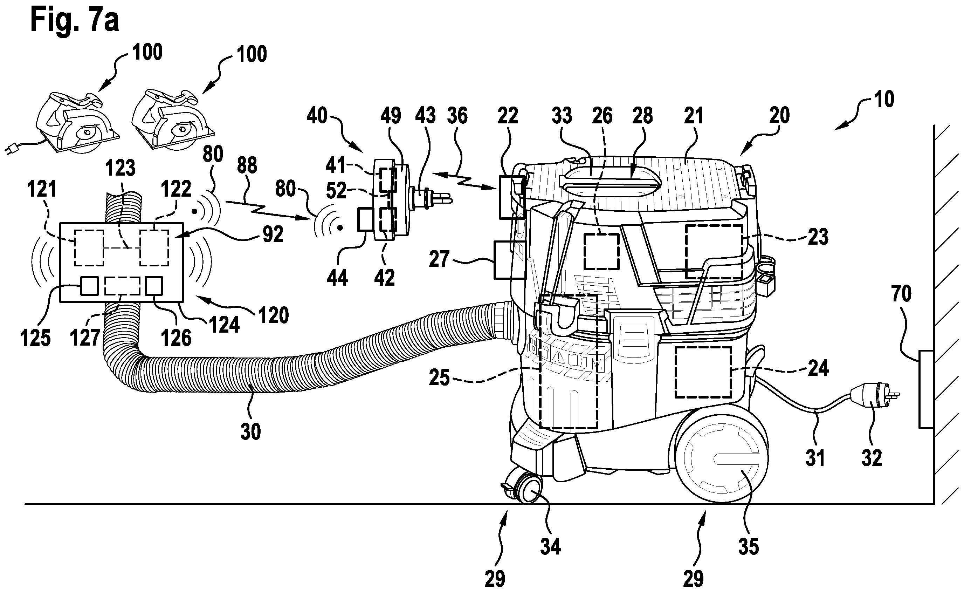

Fig. 7a zeigt eine schematische Ausführungsform gemäß Fig. 1, mit dem Unterschied, dass hier das System **10** ein Sensormodul **120** umfasst. Das Sensormodul **120** ist lösbar am Saugschlauch **30** des Sauggeräts **20** befestigt. Der Saugschlauch **30** wiederum ist mit der Werkzeugmaschine **100** verbunden.

Das Sensormodul **120** umfasst ein Sensormodulgehäuse **124,** als auch eine Sensoreinheit **121,** eine Sensormodulkommunikationseinheit **122** und eine Sensormodulenergieversorgung **127.** Zudem umfasst das Sensormodul **120** ein Sensormodulanzeigeelement **125.** Das Sensormodulanzeigeelement **125** ist am Sensormodulgehäuse **124** angeordnet. Das Sensormodulanzeigeelement **125** zeigt Betriebszustände des Sensormoduls **120** an.

Weiter umfasst das Sensormodul **120** eine Sensormodulbedieneinheit **126.** Die Sensormodulbedieneinheit **126** ist am Sensormodulgehäuse **124** angeordnet. Der Benutzer kann über die Sensormodulbedieneinheit **126** beispielsweise das Sensormodul **120** ein- und/oder ausschalten, oder einen Kopplungsvorgang mit dem Steckmodul **40** einleiten. Der Kopplungsvorgang, bzw. das Pairing, ist dem Fachmann hinreichend bekannt.

Die Sensoreinheit **121** ist dazu ausgebildet, Betriebszustände der Werkzeugmaschine **100** zu erfassen, wenn der Saugschlauch **30** mit der Werkzeugmaschine **100** verbunden ist. Die Sensoreinheit **121** erkennt beispielsweise die Betriebszustände "aktiv" und "inaktiv" der Werkzeugmaschine **100** über Vibrationen der Werkzeugmaschine **100.** Sobald die Sensoreinheit **121** den Betriebszustand erkannt hat, wird dieser über eine leitungsgebundene Verbindung **123** an die Sensormodulkommunikationseinheit **122** übermittelt. Die Sensormodulkommunikationseinheit **122** ist dazu ausgebildet, diesen Betriebszustand zu erkennen und daraus das erste Signal **80** zu erzeugen. Anschließend sendet die Sensormodulkommunikationseinheit **122** das erste Signal **80** über eine Kommunikationsverbindung **88** an das Steckmodul **40.** Die Kommunikationsverbindung **88** ist hierbei drahtlos, kann aber auch in einer alternativen Ausführungsform drahtgebunden sein. Damit ist die Steckmodulkommunikationseinheit **41** dazu ausgebildet, mit der Sensorkommunikationseinheit **122** drahtlos zu kommunizieren. Um die Kommunikationsverbindung **88** zwischen der Sensormodulkommunikationseinheit **122** und der Steckmodulkommunikationseinheit **41** drahtlos herzustellen, muss der Kopplungsvorgang, bzw. das Pairing, zwischen diesen beiden Bauteilen stattfinden. Dieser Kopplungsvorgang ist dem Fachmann hinreichend bekannt.

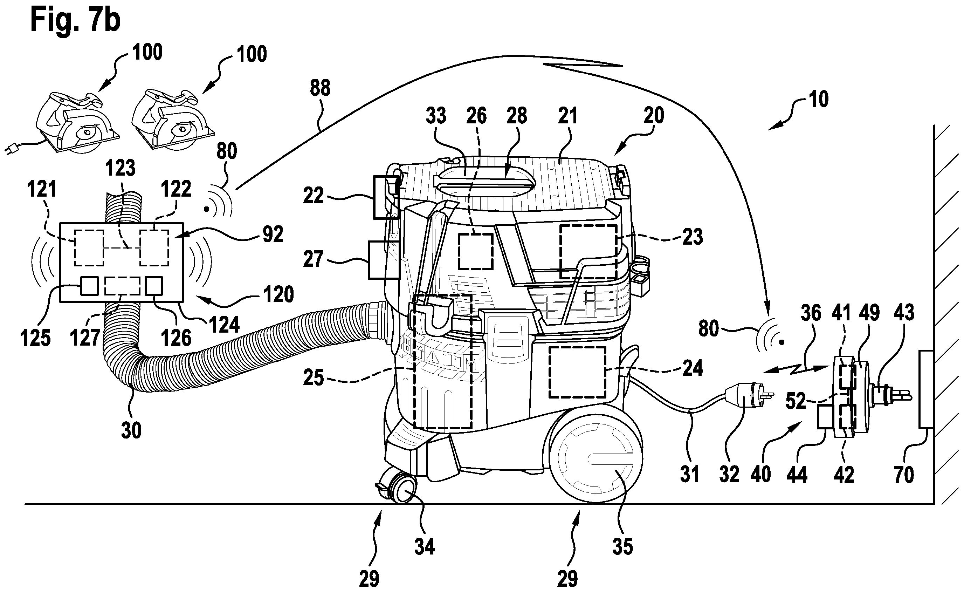

In Fig. 7b ist eine Alternative zu der Ausgestaltung nach Fig. 7a dargestellt, mit dem Unterschied, dass hier das Steckmodul **40** mit der externen Netzsteckdose **70** verbunden ist und das Stromversorgungskabel **31** des Sauggeräts **20** mit der Steckmodulnetzsteckdose **44.** Der Aufbau und die Funktionsweise des Sensormoduls **120** ist in Fig. 7a angegeben. Die Funktionsweise des Steckmoduls **40,** wenn dieses mit der externen Netzsteckdose **70** verbunden ist, ist in Fig. 2 beschrieben.

## Patentansprüche

1. System (**10**) umfassend ein Sauggerät (**20**) mit einem Sauggerätgehäuse (**21**) und mit zumindest einer Sauggerätnetzsteckdose (**22**), wobei die zumindest eine Sauggerätnetzsteckdose (**22**) am Sauggerätgehäuse (**21**) angebracht ist, und ein Steckmodul (**40**) mit einer Steckmodulkommunikationseinheit (**41**), mit einer elektrischen Steckmodulnetzsteckereinheit (**43**) und mit einer Stromsteuereinheit (**42**), die dazu ausgebildet ist, einen elektrischen Strom (**36**) zwischen dem Steckmodul (**40**) und dem Sauggerät (**20**) zu steuern.

2. System (**10**) nach Anspruch 1, **dadurch gekennzeichnet, dass** die Steckmodulkommunikationseinheit (**41**) dazu ausgebildet ist, ein erstes Signal (**80**), insbesondere ein Kommunikationssignal, von zumindest einer externen Kommunikationseinheit (**92**) zu empfangen.

3. System (**10**) nach Anspruch 2, **dadurch gekennzeichnet, dass** die Steckmodulkommunikationseinheit (**41**) dazu vorgesehen ist, das erste Signal (**80**) in ein zweites Signal (**81**), insbesondere ein elektrisches Signal, umzuwandeln.

4. System (**10**) nach Anspruch 3, **dadurch gekennzeichnet, dass** die Steckmodulkommunikationseinheit (**41**) dazu ausgebildet ist, das zweite Signal (**81**) leitungsgebunden an die Stromsteuereinheit (**42**) weiterzuleiten.

5. System (**10**) nach einem der Ansprüche 1 bis 4, **dadurch gekennzeichnet, dass** das Steckmodul (**40**) lösbar mit der zumindest einen Sauggerätnetzsteckdose (**22**) verbindbar ist.

6. System (**10**) nach Anspruch 5, **dadurch gekennzeichnet, dass** die Stromsteuereinheit (**42**) eine Signalsteuereinheit (**45**) und eine elektrische Last (**46**) umfasst, wobei die Signalsteuereinheit (**45**) dazu vorgesehen ist, das zweite Signal (**81**) zu empfangen.

7. System (**10**) nach Anspruch 6, **dadurch gekennzeichnet, dass** die Signalsteuereinheit (**45**) dazu ausgebildet ist, das zweite Signal (**81**) an die elektrische Last (**46**) zu schalten, und die elektrische Last (**46**) dazu vorgesehen ist, das zweite Signal (**81**) zu empfangen und in ein drittes Signal (**82**) umzuwandeln, wobei die elektrische Last (**46**) das dritte Signal (**82**) an die elektrische Steckmodulnetzsteckereinheit (**43**) weiterleitet.

8. System (**10**) nach Anspruch 1 bis 4, **dadurch gekennzeichnet, dass** das Steckmodul (**40**) zudem zumindest eine Steckmodulnetzsteckdose (**44**) aufweist und die Stromsteuereinheit (**42**) zusätzlich eine Schalteinheit (**47**) umfasst, wobei das Steckmodul (**40**) lösbar mit einer externen Netzsteckdose (**70**) verbindbar ist und ein Stromversorgungskabel (**31**) des Sauggeräts (**20**) lösbar mit zumindest einer Steckmodulnetzsteckdose (**44**) verbindbar ist.

9. System (**10**) nach Anspruch 8, **dadurch gekennzeichnet, dass** die Signalsteuereinheit (**45**) zusätzlich dazu ausgebildet ist, das zweite Signal (**81**) an die Schalteinheit (**47**) zu schalten, wenn das Stromversorgungskabel (**31**) des Sauggeräts (**20**) mit der zumindest einen Steckmodulnetzsteckdose (**44**) verbunden ist und das Steckmodul (**40**) mit der externen Netzsteckdose (**70**) verbunden ist.

10. System (**10**) nach Anspruch 9, **dadurch gekennzeichnet, dass** die Schalteinheit (**47**) dazu ausgebildet ist, das zweite Signal (**81**) zu empfangen und eine leitungsgebundene Verbindung (**54**) zwischen der zumindest einen Steckmodulnetzsteckdose (**44**) und der elektrischen Steckmodulnetzsteckereinheit (**43**) zu schalten.

11. System (**10**) nach einem der vorherigen Ansprüche, **dadurch gekennzeichnet, dass** das System (**10**) zusätzlich eine Werkzeugmaschine (**100**), insbesondere eine Handwerkzeugmaschine und/oder eine stationäre Werkzeugmaschine, mit einer Werkzeugmaschinenkommunikationseinheit (**101**) aufweist, wobei die Steckmodulkommunikationseinheit (**41**) dazu ausgebildet ist, mit der Werkzeugmaschinenkommunikationseinheit (**101**) eine Kommunikationsverbindung (**83**) einzugehen.

12. System (**10**) nach Anspruch 11, **dadurch gekennzeichnet, dass** die Steckmodulkommunikationseinheit (**41**) dazu vorgesehen ist, mit der Werkzeugmaschinenkommunikationseinheit (**101**) eine direkte Kommunikationsverbindung (**84**) einzugehen.

13. System (**10**) nach Anspruch 11, **dadurch gekennzeichnet, dass** die Steckmodulkommunikationseinheit (**41**) zusätzlich dazu ausgebildet ist, mit der Werkzeugmaschinenkommunikationseinheit (**101**) eine indirekte Kommunikationsverbindung (**85**) mittels eines externen Kommunikationsgerätes (**90**) einzugehen.

14. System (**10**) nach einem der vorherigen Ansprüche, **dadurch gekennzeichnet, dass** das System (**10**) zudem ein Sensormodul (**120**) mit einer Sensormodulkommunikationseinheit (**122**) und mit einer Sensoreinheit (**121**) umfasst.

15. System (**10**) nach Anspruch 14, **dadurch gekennzeichnet, dass** das Sensormodul (**120**) dazu vorgesehen ist, eine lösbare Verbindung mit einem Saugschlauch (**30**) des Sauggeräts (**20**) einzugehen.

16. System (**10**) nach Anspruch 15, **dadurch gekennzeichnet, dass** die Sensoreinheit (**121**) dazu ausgebildet ist, Betriebszustände der Werkzeugmaschine (**100**) zu erfassen, und der Saugschlauch (**30**) mit der Werkzeugmaschine (**100**) verbunden ist, wobei die Sensoreinheit (**121**) dazu vorgesehen ist, die Betriebszustände leitungsgebunden an die Sensormodulkommunikationseinheit (**122**) zu übermitteln, und die Sensormodulkommunikationseinheit (**122**) dazu ausgebildet ist, das erste Signal (**80**) an das Steckmodul (**40**) zu senden.

## Claims

1. System (10) comprising a vacuum device (20) having a vacuum device housing (21) and having at least one vacuum device network socket (22), wherein the at least one vacuum device network socket (22) is attached to the vacuum device housing (21), and a plug-in module (40) having a plug-in module communication unit (41), having an electrical plug-in module network plug unit (43) and having a current control unit (42), which is designed to control an electric current (36) between the plug-in module (40) and the vacuum device (20).

2. System (10) according to Claim 1, **characterized in that** the plug-in module communication unit (41) is designed to receive a first signal (80), in particular a communication signal, from at least one external communication unit (92).

3. System (10) according to Claim 2, **characterized in that** the plug-in module communication unit (41) is provided to convert the first signal (80) into a second signal (81), in particular an electric signal.

4. System (10) according to Claim 3, **characterized in that** the plug-in module communication unit (41) is designed to relay the second signal (81) in a wired manner to the current control unit (42).

5. System (10) according to any one of Claims 1 to 4, **characterized in that** the plug-in module (40) is detachably connectable to the at least one vacuum device network socket (22).

6. System (10) according to Claim 5, **characterized in that** the current control unit (42) comprises a signal control unit (45) and an electric load (46), wherein the signal control unit (45) is provided to receive the second signal (81).

7. System (10) according to Claim 6, **characterized in that** the signal control unit (45) is designed to switch the second signal (81) to the electric load (46), and the electric load (46) is provided to receive the second signal (81) and convert it into a third signal (82), wherein the electric load (46) relays the third signal (82) to the electric plug-in module network plug unit (43) .

8. System (10) according to Claims 1 to 4, **characterized in that** the plug-in module (40) moreover comprises at least one plug-in module network socket (44) and the current control unit (42) additionally comprises a switching unit (47), wherein the plug-in module (40) is detachably connectable to an external network socket (70) and a power supply cable (31) of the vacuum device (20) is detachably connectable to at least one plug-in module network socket (44).

9. System (10) according to Claim 8, **characterized in that** the signal control unit (45) is additionally designed to switch the second signal (81) to the switching unit (47) when the power supply cable (31) of the vacuum device (20) is connected to the at least one plug-in module network socket (44) and the plug-in module (40) is connected to the external network socket (70).

10. System (10) according to Claim 9, **characterized in that** the switching unit (47) is designed to receive the second signal (81) and to switch a wired connection (54) between the at least one plug-in module network socket (44) and the electrical plug-in module network plug unit (43).

11. System (10) according to any one of the preceding claims, **characterized in that** the system (10) additionally comprises a power tool (100), in particular a handheld power tool and/or a stationary power tool, having a power tool communication unit (101), wherein the plug-in module communication unit (41) is designed to establish a communication connection (83) to the power tool communication unit (101).

12. System (10) according to Claim 11, **characterized in that** the plug-in module communication unit (41) is provided to establish a direct communication connection (84) to the power tool communication unit (101).

13. System (10) according to Claim 11, **characterized in that** the plug-in module communication unit (41) is additionally designed to establish an indirect communication connection (85) to the power tool communication unit (101) by means of an external communication device (90).

14. System (10) according to any one of the preceding claims, **characterized in that** the system (10) moreover comprises a sensor module (120) having a sensor module communication unit (122) and having a sensor unit (121).

15. System (10) according to Claim 14, **characterized in that** the sensor module (120) is provided to establish a detachable connection to a vacuum hose (30) of the vacuum device (20).

16. System (10) according to Claim 15, **characterized in that** the sensor unit (121) is designed to detect operating states of the power tool (100), and the vacuum hose (30) is connected to the power tool (100), wherein the sensor unit (121) is provided to transmit the operating states in a wired manner to the sensor module communication unit (122), and the sensor module communication unit (122) is designed to transmit the first signal (80) to the plug-in module (40).

## Revendications

1. Système (10), comprenant un appareil d'aspiration (20) doté d'un boîtier d'appareil d'aspiration (21) et d'au moins une prise secteur d'appareil d'aspiration (22), ladite au moins une prise secteur d'appareil d'aspiration (22) étant placée sur le boîtier d'appareil d'aspiration (21), et comprenant un module enfichable (40) doté d'une unité de communication de module enfichable (41), d'une unité de fiche secteur de module enfichable électrique (43) et d'une unité de régulation de courant (42) qui est réalisée pour réguler un courant électrique (36) entre le module enfichable (40) et l'appareil d'aspiration (20).

2. Système (10) selon la revendication 1, **caractérisé en ce que** l'unité de communication de module enfichable (41) est réalisée pour recevoir un premier signal (80), en particulier un signal de communication, d'au moins une unité de communication externe (92).

3. Système (10) selon la revendication 2, **caractérisé en ce que** l'unité de communication de module enfichable (41) est prévue pour convertir le premier signal (80) en un deuxième signal (81), en particulier en un signal électrique.

4. Système (10) selon la revendication 3, **caractérisé en ce que** l'unité de communication de module enfichable (41) est réalisée pour retransmettre le deuxième signal (81) par câble à l'unité de régulation de courant (42).

5. Système (10) selon l'une quelconque des revendications 1 à 4, **caractérisé en ce que** le module enfichable (40) peut être relié de manière amovible à ladite au moins une prise secteur d'appareil d'aspiration (22).

6. Système (10) selon la revendication 5, **caractérisé en ce que** l'unité de régulation de courant (42) comprend une unité de commande de signal (45) et une charge électrique (46), l'unité de commande de signal (45) étant prévue pour recevoir le deuxième signal (81) .

7. Système (10) selon la revendication 6, **caractérisé en ce que** l'unité de commande de signal (45) est réalisée pour commuter le deuxième signal (81) sur la charge électrique (46), et la charge électrique (46) est prévue pour recevoir le deuxième signal (81) et pour le convertir en un troisième signal (82), la charge électrique (46) retransmettant le troisième signal (82) à l'unité de fiche secteur de module enfichable électrique (43).

8. Système (10) selon la revendication 1 à 4, **caractérisé en ce que** le module enfichable (40) présente en outre une prise secteur de module enfichable (44) et l'unité de régulation de courant (42) comprend en outre une unité de commutation (47), le module enfichable (40) pouvant être relié de manière amovible à une prise secteur externe (70) et un câble d'alimentation électrique (31) de l'appareil d'aspiration (20) pouvant être relié de manière amovible à au moins une prise secteur de module enfichable (44).

9. Système (10) selon la revendication 8, **caractérisé en ce que** l'unité de commande de signal (45) est en outre réalisée pour commuter le deuxième signal (81) sur l'unité de commutation (47) lorsque le câble d'alimentation électrique (31) de l'appareil d'aspiration (20) est relié à ladite au moins une prise secteur de module enfichable (44) et le module enfichable (40) est relié à la prise secteur externe (70) .

10. Système (10) selon la revendication 9, **caractérisé en ce que** l'unité de commutation (47) est réalisée pour recevoir le deuxième signal (81) et pour commuter une liaison câblée (54) entre ladite au moins une prise secteur de module enfichable (44) et l'unité de fiche secteur de module enfichable électrique (43).

11. Système (10) selon l'une quelconque des revendications précédentes, **caractérisé en ce que** le système (10) présente en outre une machine-outil (100), en particulier un outil à main motorisé et/ou une machine-outil stationnaire, dotée d'une unité de communication de machine-outil (101), l'unité de communication de module enfichable (41) étant réalisée pour établir une liaison de communication (83) avec l'unité de communication de machine-outil (101).

12. Système (10) selon la revendication 11, **caractérisé en ce que** l'unité de communication de module enfichable (41) est prévue pour établir une liaison de communication directe (84) avec l'unité de communication de machine-outil (101).

13. Système (10) selon la revendication 11, **caractérisé en ce que** l'unité de communication de module enfichable (41) est réalisée en outre pour établir avec l'unité de communication de machine-outil (101) une liaison de communication indirecte (85) au moyen d'un appareil de communication externe (90).

14. Système (10) selon l'une quelconque des revendications précédentes, **caractérisé en ce que** le système (10) comprend en outre un module de capteur (120) doté d'une unité de communication de module de capteur (122) et d'une unité de capteur (121).

15. Système (10) selon la revendication 14, **caractérisé en ce que** le module de capteur (120) est prévu pour établir une liaison amovible avec un tuyau d'aspiration (30) de l'appareil d'aspiration (20).

16. Système (10) selon la revendication 15, **caractérisé en ce que** l'unité de capteur (121) est réalisée pour détecter des états de fonctionnement de la machine-outil (100), et le tuyau d'aspiration (30) est relié à la machine-outil (100), l'unité de capteur (121) étant prévue pour transmettre les états de fonctionnement par câble à l'unité de communication de module de capteur (122), et l'unité de communication de module de capteur (122) étant réalisée pour envoyer le premier signal (80) au module enfichable (40).
